# DEMANDE DE BREVET EUROPEEN

(11) **EP 1 879 152 A2**
(43) Date de publication de la demande: **16.01.2008**
(21) Numéro de dépôt: 07115595.6
(22) Date de dépôt: 16.10.1997
(51) Int. Cl.: G07B 15/00

(54) **Procédé et installation pour réaliser un titre d'usager personnalisé infalsifiable**

(30) Priorité: 17.10.1996 FR 9612923
(62) Demande divisionnaire de: 97911278.6
(71) Demandeur: Gkard S.A.S., 38100 Grenoble (FR)
(72) Inventeur: La désignation de l'inventeur n'a pas encore été déposée
(74) Mandataire: Scheer, Luc

(57) **Abrégé**

La présente invention concerne un procédé pour réaliser un titre d'usager personnalisé infalsifiable, autorisant un usage régi par une autorité, ledit titre étant constitué par une carte comportant une face munie d'une photographie du portrait de l'usager, et un support mémoire comportant au moins des informations relatives à l'usage. Le procédé comprend les étapes suivantes selon lesquelles: on saisit numériquement une prise de vue de données graphiques correspondant au visage de l'usager, on saisit numériquement au moins les informations relatives à l'usage, on fournit une carte comportant une face et un support d'enregistrement, on personnalise graphiquement ladite carte par impression graphique de ladite photographie, on personnalise électriquement la carte en enregistrant lesdites informations numériques dans ledit support. Le procédé est caractérisé en ce que l'on dissocie les étapes et en ce que l'on soumet la mise en oeuvre d'une étape dissociée des autres étapes à autorisation et/ou à contrôle ultérieur de l'autorité. L'invention concerne également une installation mettant en oeuvre le procédé. Application à la réalisation de cartes d'abonnement pour les transports en commun, de cartes d'identité médicales dites cartes santé, de cartes bancaires.

## Description

La présente invention concerne un procédé et une installation pour réaliser un titre d'usager personnalisé infalsifiable, autorisant un usage régi par une autorité, ledit titre étant constitué par une carte comportant une face munie d'une photographie du portrait de l'usager, et un support mémoire comportant au moins des informations relatives à l'usage.

L'invention vise en particulier la réalisation de cartes d'abonnement personnalisées fonctionnant avec ou sans contact (dites PSC) et permettant l'usage des transports en commun. Elle vise également la réalisation de cartes d'identité médicale dites cartes santé, ou de cartes qui sont renouvelées périodiquement telles les cartes bancaires.

De telles cartes qui comprennent des cartes à mémoire ou à puce, sont actuellement utilisées notamment comme support de document d'identité, de droit d'accès à un établissement et/ou à un service, ou comme carte d'abonnement. La photographie de l'usager est particulièrement utile pour contrôler rapidement que le porteur de la carte à puce est bien l'usager autorisé.

En général, le procédé de réalisation d'une carte comporte des étapes consistant à effectuer une prise de vue du portrait d'un usager, à saisir numériquement les données graphiques correspondantes, à saisir numériquement au moins les informations relatives à l'usage, à fournir une carte comportant une face et un support d'enregistrement, à personnaliser graphiquement ladite carte par impression graphique de ladite photographie sur la face de la carte à partir desdites données graphiques numériques, à personnaliser électriquement la carte en enregistrant lesdites informations numériques dans ledit support.

Un tel procédé offre l'avantage de pouvoir visualiser la prise de vue avant impression et se passe de support consommable tel une photographie tirée sur papier.

Il est actuellement mis en oeuvre dans une installation comportant des moyens de prise de vue et de saisie de données graphiques sous forme numérique, par exemple une caméra vidéo ou un appareil photographique numérique, des moyens de saisie de données alphanumériques tel un micro-ordinateur, et des moyens de transfert de l'ensemble de ces données sur la carte.

Les moyens de transfert graphique dits de personnalisation graphique comportent typiquement une imprimante sur plastique, tandis que les moyens de transfert des informations dits de personnalisation électrique comprennent des moyens aptes à enregistrer les données alphanumériques respectivement dans la puce.

De telles installations ont l'inconvénient d'être onéreuses et de mobiliser du personnel pendant longtemps à chaque réalisation de carte.

En outre, elles se trouvent généralement chez quelques entreprises privées dont l'activité est la personnalisation de cartes. Ces entreprises se trouvent généralement éloignées du lieu de fréquentation habituel de l'usager.

En conséquence, l'usager est contraint de se déplacer dans ces entreprises et de perdre du temps pour le déplacement auquel s'ajoute le temps nécessaire à la réalisation de la carte. Ces contraintes constituent un frein au développement des cartes personnalisées.

D'autre part, la généralisation de l'utilisation des cartes à puce et leur renouvellement entraînent des quantités élevées de cartes à réaliser dans un délai très court. Cela est impossible en ayant recours à l'installation existante ci-dessus.

L'invention vise à pallier les inconvénients ci-dessus de manière à favoriser le développement de ce type de carte.

En conséquence, l'invention poursuit plusieurs objectifs cumulables ci-après.

D'une manière générale, l'objectif de l'invention est principalement de permettre une réalisation de la carte ci-dessus qui ne soit pas sujette à fraude pendant ou après sa réalisation et avec le minimum de contraintes pour l'usager.

L'invention vise également à permettre de produire facilement et rapidement un nombre élevé de cartes à puce personnalisées.

L'invention vise également à réduire autant que possible les contraintes de l'autorité qui se traduisent notamment par des frais de mise en oeuvre.

A cet effet, l'invention a d'abord pour objet un procédé conforme à la revendication 1. Il est caractérisé en ce que l'on dissocie les étapes et en ce que l'on soumet la mise en oeuvre d'une étape dissociée des autres étapes à autorisation et/ou contrôle ultérieur de l'autorité.

Grâce à ces dispositions, le procédé permet de réduire les contraintes de l'usager dans la réalisation de la carte, notamment de temps ou de déplacement. En effet, en étant dissociées des autres étapes, les étapes peuvent être réalisées n'importe quand, n'importe où, et par n'importe qui.

Ces dispositions permettent également à l'autorité d'empêcher qu'une personne non autorisée n'intervienne frauduleusement dans une étape quelconque de réalisation de la carte en se substituant au titulaire.

Selon une caractéristique préférée, au moins les étapes de prise de vue et de saisie numérique des données graphiques sont dissociées des étapes restantes, le procédé comprenant une étape selon laquelle on met au moins les données graphiques à disposition de l'autorité sous son contrôle direct ou indirect.

En dissociant ainsi les étapes du procédé, il est plus facile de le mettre en oeuvre. En outre, l'autorité conserve le contrôle de l'exploitation des données et par voie de conséquence également le contrôle de la réalisation de la carte puisque les données sont mises à sa disposition.

Selon un premier mode de mise en oeuvre, avec dissociation dans le temps, le procédé comprend les étapes suivantes selon lesquelles:
- on attribue une donnée d'identification aux données graphiques et/ou aux informations et on les saisit sous cette donnée de manière espacée dans le temps.
- on stocke au moins les données graphiques et on les rappelle par le biais de cette donnée d'identification pour la personnalisation de la carte.

Ainsi, de telles caractéristiques libèrent l'usager des contraintes de temps puisque les saisies des données graphiques et/ou des informations peuvent être effectuées quand il le souhaite.

Elles libèrent pareillement l'autorité, celle-ci pouvant exploiter les données quand elle le souhaite simplement en les rappelant, celles-ci étant stockées à sa disposition.

Selon un deuxième mode de mise en oeuvre, avec dissociation dans l'espace, la prise de vue et la saisie numérique des données graphiques sont effectuées sur un premier site proche de l'usager tandis que les étapes restantes sont effectuées sur un deuxième site distinct du premier, et on transmet les données graphiques numériques à l'autorité.

En procédant ainsi, cette étape du procédé est à la base de la réduction des contraintes de déplacement de l'usager, le lieu d'exécution des saisies étant décentralisé.

Selon un troisième mode de mise en oeuvre avec dissociation dans le contrôle, au moins la prise de vue et la saisie numérique des données graphiques s'effectuent sous le contrôle de l'usager; cette prise de vue s'effectue de préférence en libre service.

En procédant ainsi, l'autorité peut se décharger de cette étape qui en général prend beaucoup de temps et ce sans nuire énormément à l'usager. En effet, cette étape est en général bienvenue chez l'usager car elle peut lui permettre de prendre des photographies à sa guise et de choisir celle qui lui convient.

En outre, cette caractéristique permet un gain de temps pour l'autorité dans la mesure où cette étape peut être effectuée en temps masqué par l'usager.

Selon une première variante de mise en oeuvre du procédé avec dissociation dans le temps, on effectue dans un premier temps, la saisie des informations et leur enregistrement sur une carte provisoire, et on réalise dans un deuxième temps, la saisie des données graphiques et leur impression sur la carte.

En procédant ainsi, on réduit considérablement les contraintes de temps pour l'usager tout en lui permettant d'utiliser sa carte immédiatement, la carte provisoire donnant le même droit qu'une carte définitive.

Selon une caractéristique préférée, le procédé comprend une étape selon laquelle l'autorité vérifie la conformité de la donnée d'identification pour autoriser au moins la saisie des données graphiques.

Ainsi, l'autorité, peut exercer un contrôle tant pour l'authentification de la carte que de l'usager, ou les deux à la fois. Pour cela la donnée est respectivement émise soit par l'autorité, soit par l'usager, ou soit par les deux à la fois.

Selon une autre caractéristique préférée, le procédé comprend une étape selon laquelle pour vérifier que le porteur est bien l'usager, au moins les données graphiques rappelées sont visualisées de manière à les comparer avec le visage de l'usager et on réalise une carte définitive en cas de conformité.

Grâce à cette étape, on exclut toute possibilité de fraude; l'autorité régissant l'usage, par exemple un employé d'un établissement de transport, peut visionner simultanément toutes les données à inscrire sur la carte à puce personnalisée et la photographie à imprimer et il peut comparer cette dernière avec l'usager qui se trouve devant lui avant de confectionner la carte à puce personnalisée et de la délivrer.

En alternative, l'autorité rappelle également le nom de l'usager et le compare à celui figurant sur sa carte d'identité.

Selon une autre caractéristique de l'invention, les étapes de personnalisation peuvent être effectuées en petite série à des endroits multiples décentralisés ou en grande série à un endroit centralisé.

Il est ainsi possible de réaliser des cartes en grande quantité et rapidement.

L'invention a également pour objet une installation permettant de mettre en oeuvre le procédé ci-dessus et comprenant:
- au moins une station de prise de vue comportant un moyen de saisie numérique de données graphiques correspondant au portrait de l'usager,
- au moins un moyen de saisie numérique des informations,
- au moins un moyen de stockage et de distribution de données,
- au moins un moyen d'impression pour personnaliser graphiquement ladite carte à partir desdites données graphiques numériques,
- au moins un moyen d'enregistrement pour enregistrer lesdites informations dans ledit support,
- au moins une unité centrale pour piloter ces moyens.

L'installation est caractérisée en ce qu'elle est apte à dissocier le fonctionnement / utilisation desdits moyens entre eux et à soumettre leur fonctionnement / utilisation à autorisation et/ou contrôle ultérieur de l'autorité.

Grâce à ces caractéristiques, l'installation est adaptée à mettre en oeuvre le procédé de l'invention en toute sécurité.

Selon une caractéristique préférée, elle est apte à dissocier le fonctionnement / utilisation des moyens de prise de vue et de saisie numérique de données graphiques des autres moyens, et à mettre les données graphiques obtenues à disposition de l'autorité.

Ces dispositions permettent une utilisation plus souple de l'installation.

Selon un premier mode de réalisation, l'installation est apte à attribuer une donnée d'identification aux données graphiques et/ou aux informations, à les stocker sous ladite donnée d'identification dans les moyens de stockage et de distribution, lesdits moyens de stockage étant sous le contrôle de l'autorité, et à les rappeler par l'intermédiaire de ladite donnée.

Cette installation est particulièrement bien adaptée pour dissocier le fonctionnement / utilisation des moyens dans le temps et réduire ainsi les contraintes de temps de l'usager et de l'autorité.

Selon un autre mode de réalisation, l'installation comporte une pluralité de stations de prise de vue décentralisées, chaque station étant apte à transmettre à distance au moins les données graphiques à au moins un moyen de stockage.

Ces dispositions permettent un fonctionnement / utilisation des moyens de saisie dissocié dans l'espace. Il est ainsi possible de saisir en même temps les données graphiques d'un grand nombre d'usagers sans qu'il y ait trop de contraintes de déplacement pour eux.

Selon un autre mode de réalisation, ladite station de prise de vue est adaptée à fonctionner en libre service sous le contrôle partiel de l'usager.

Grâce à ces dispositions, l'installation est particulièrement bien adaptée pour dissocier le fonctionnement / utilisation des moyens dans leur contrôle. En outre, l'aspect libre service autorise l'usager à utiliser la station de prise de vue quand il le souhaite. Cette caractéristique permet également à l'autorité de se décharger sur l'usager des aspects contraignants et onéreux de la prise de vue.

Selon une caractéristique avantageuse, l'installation peut être adaptée à un fonctionnement multicarte pour plusieurs autorités à la fois. A cet effet, elle comprend des moyens de sélection de la carte à obtenir ainsi que d'un mode fonctionnement correspondant.

Grâce à cette caractéristique, il est possible de tirer des revenus locatifs d'un parc existant de cabines qui serait adapté à plusieurs autorités ou de partager l'investissement entre plusieurs autorités. Cela permet d'atteindre l'objectif de l'invention relatif à la réduction des frais de mise en oeuvre du procédé.

Selon une autre caractéristique préférée, l'installation comporte en outre une pluralité de stations de personnalisation décentralisées montées en réseau entre elles, chaque station de personnalisation comportant :
- un moyen de saisie d'informations, un moyen de stockage et de distribution de données,
- une imprimante graphique pour imprimer les données graphiques sur ladite carte,
- un moyen d'enregistrement pour enregistrer lesdites informations dans ledit support,
- une interface de communication pour communiquer au moins avec une autre station de personnalisation,
- une unité centrale pour piloter ces moyens.

Grâce à ces caractéristiques, l'invention est particulièrement adaptée, d'une part à la saisie d'un grand nombre d'informations sans imposer de contraintes de temps et de lieu à l'usager et d'autre part, à la personnalisation d'un grand nombre de cartes très rapidement.

Selon une autre caractéristique préférée de l'invention, l'installation comporte en outre une station de personnalisation grande série.

Grâce à ces dispositions, cette installation est particulièrement bien adaptée à la réalisation d'un grand nombre de cartes en un temps très court comme par exemple pour une campagne de renouvellement de cartes.

D'autres caractéristiques et avantages de l'invention ressortiront de la description qui suit de plusieurs modes de mise en oeuvre et de réalisation de l'invention, donnés uniquement à titre d'exemple, en se référant aux dessins ci-annexés sur lesquels:
- les figures 1 à 4 sont des organigrammes illustrant les étapes de mise en oeuvre du procédé pour la réalisation d'une carte à puce personnalisée provisoire ;
- l'organigramme de la figure 2 représente également les étapes d'un programme de fonctionnement d'une cabine de prise de vue en libre service pour la réalisation de la carte transport;
- l'organigramme de la figure 3 représente les étapes de la réalisation et de la remise du PSC définitif;
- la figure 4 est un organigramme des étapes mises en oeuvre pour la réalisation de cartes à puce personnalisées en grande série en usine;
- les figures 5 à 8 sont des organigrammes illustrant les étapes de mise en oeuvre du procédé par exemple pour la réalisation d'une carte santé.
- les organigrammes des figures 6 et 7 représentent également les étapes d'un programme de fonctionnement de la cabine de prise de vue pour la réalisation de la carte santé;
- la figure 8 décrit les étapes de la réalisation de la prise de vue chez un photographe;
- la figure 9 représente une installation pour réaliser la carte santé notamment;
- la figure 10 représente une station de personnalisation grande série;
- la figure 11, représente une station de prise de vue chez un photographe pour la carte santé notamment;
- la figure 12 représente plusieurs variantes d'installations pour la réalisation de la carte de transport;
- la figure 13, représente une station de personnalisation petite série équipant notamment des guichets d'un réseau de transport en commun;
- la figure 14 représente une vue en perspective d'une cabine de prise de vue automatique en libre service ;
- la figure 15 est un schéma de la cabine de prise de vue automatique en libre service de la figure 14 ;
- la figure 16 représente une installation générale conforme à un mode de réalisation préféré de l'invention.
- la figure 17 illustre une mémoire programme d'une station de personnalisation de type multicarte;
- la figure 18 illustre une mémoire programme d'une station de prise de vue de type multicarte;

Dans la description qui va suivre, on va décrire tout d'abord, le procédé de l'invention selon un mode de mise en oeuvre dans le cadre de la réalisation d'un titre de transport personnalisé autorisant l'accès à un réseau de transport en commun. Dans ce cas, l'autorité représente une société de transport en commun qui contrôle ou régit ce réseau ainsi que son usage par les usagers détenteurs d'un titre.

Le procédé de l'invention sera également décrit ultérieurement dans le cadre de la réalisation d'un titre personnalisé dit carte santé autorisant l'accès à des établissements de santé ou le bénéfice de prestations médicales, ou des remboursements de soins. Ces prestations et leur accès pour un assuré social dit usager, sont régies ou contrôlées par exemple par une caisse d'assurance sociale, dénommée l'autorité par la suite.

Selon l'invention, le titre d'usager personnalisé est constitué par une carte comportant une face munie d'une photographie du portrait de l'usager ou de l'assuré et un support mémoire comportant au moins des informations relatives à l'usage.

Le support mémoire peut être une piste magnétique, ou une puce électronique. La carte peut être du type sans contact ou avec contacts affleurants.

Pour réaliser cette carte, le procédé de l'invention comprend des étapes consistant, à effectuer une prise de vue de données graphiques correspondant au visage de l'usager et à les saisir numériquement, puis à saisir numériquement au moins les informations relatives à l'usage, à fournir une carte comportant une face et un support d'enregistrement, à personnaliser graphiquement ladite carte par impression graphique de ladite photographie sur la face de la carte à partir desdites données graphiques numériques, à personnaliser électriquement la carte en enregistrant lesdites informations numériques dans ledit support.

Au sens de l'invention, on entend par personnalisation graphique, tout procédé permettant de reproduire une image sur une carte par exemple le visage de l'usager, à partir de données graphiques numériques, et dont le résultat est infalsifiable. Dans l'exemple, on utilise de préférence un procédé d'impression apte à imprimer ladite photographie sur une face de la carte en matière plastique. Pour cela, il est préférable de fournir une carte comportant une face vierge et exempte de traces de doigt.

Au sens de l'invention, on entend par personnalisation électrique de la carte, tout procédé consistant à enregistrer lesdites informations numériques dans ledit support, le mode d'enregistrement dépendant de la nature du support. Cela comprend notamment des enregistrements électriques dans une carte à puce, des enregistrements magnétiques dans le cas où le support est sous forme d'une piste magnétique.

Selon l'invention, le procédé est caractérisé en ce qu'au moins la prise de vue et la saisie numérique des données graphiques sont dissociées des étapes restantes et en ce qu'il comprend une étape selon laquelle on met au moins les données graphiques numériques à disposition de l'autorité sous son contrôle direct ou indirect..

Le terme « dissocié » doit être interprété au sens large comme indiqué ci-après. Dans l'état de la technique, les étapes sont généralement effectuées successivement et en moins d'un quart d'heure sous le contrôle d'une même personne représentant l'autorité et dans un même local.

Dans le terme « dissocié », on entend tout d'abord la dissociation temporelle des étapes ainsi que la dissociation dans l'espace. Mais, on entend également la dissociation dans leur contrôle.

Au sens de l'invention, les étapes ci-dessus sont dissociées dans le temps lorsque la durée séparant les saisies est supérieure à la durée nécessaire pour réaliser une carte personnalisée selon un procédé classique, la durée étant généralement de l'ordre de 5 à 10 minutes. En pratique, l'invention vise plusieurs heures, voire plusieurs jours espaçant au moins les étapes de prise de vue et/ou de saisie numérique de l'une au moins des étapes restantes.

Au sens de l'invention, les étapes ci-dessus sont dissociées dans l'espace lorsqu'elles sont effectuées dans des sites distincts, de préférence à des adresses différentes par exemple plusieurs quartiers d'une ville, ou plusieurs villes. Dans l'art antérieur, les saisies sont effectuées dans une même pièce.

Au sens de l'invention, il y a dissociation des étapes dans le contrôle lorsque le contrôle direct ou indirect des étapes est réparti entre plusieurs personnes. Dans l'invention, les étapes sont de préférence réparties ou dissociées dans leur contrôle entre l'usager et l'autorité. Le contrôle est indirect lorsqu'il est exercé par l'intermédiaire d'une autre personne telle un photographe agréé par l'autorité ou une société ou un matériel tel qu'une cabine de prise de vue automatique décrite infra.

Dans le cas de la dissociation dans le temps, la mise à disposition, peut quant à elle, consister à stocker les données ci-dessus, ou dans le cas de la dissociation dans l'espace, à les transférer et à les mémoriser au moins momentanément, l'accès aux données transférées et leur exploitation étant contrôlés par l'autorité.

La mise à disposition peut également consister à mémoriser les données au moins momentanément dans le cas d'une dissociation dans le contrôle, par exemple dans une installation autonome décrite infra, leur exploitation étant sous contrôle indirect de l'autorité dans la mesure où il s'effectue par l'intermédiaire de l'installation qui se substitue à l'autorité.

Selon le mode de dissociation temporelle, le procédé de l'invention comprend tout d'abord une étape consistant à attribuer une donnée d'identification aux données graphiques et/ou aux informations, et à les saisir de manière dissociée des autres étapes sous cette donnée d'identification, et ensuite une étape consistant à mettre à disposition directe ou indirecte de l'autorité au moins les données graphiques, et à les rappeler par le biais de cette donnée d'identification avant la personnalisation graphique et/ou électrique.

La donnée d'identification peut comprendre une donnée relative à l'usager telle son nom, prénom; elle peut comprendre une donnée relative également au système et à l'usager, par exemple un numéro de dossier, un numéro d'ordre, ou un numéro chronologique; la donnée d'identification peut comprendre également une donnée relative uniquement au système telle un numéro de guichet.

La donnée d'identification peut être émise par l'usager telle son nom, un code personnel arbitraire choisi par l'usager, tandis qu'elle peut être émise par l'autorité dans les autres cas, notamment par le biais d'une installation automatique décrite infra..

Les données graphiques et/ou informations sont mises à disposition sous cette donnée en étant stockées sous ou avec cette donnée.

On comprend que la donnée d'identification sert à identifier les fichiers, et/ou le guichet, et/ou l'usager, et/ou la carte en comportant un identifiant de chacun

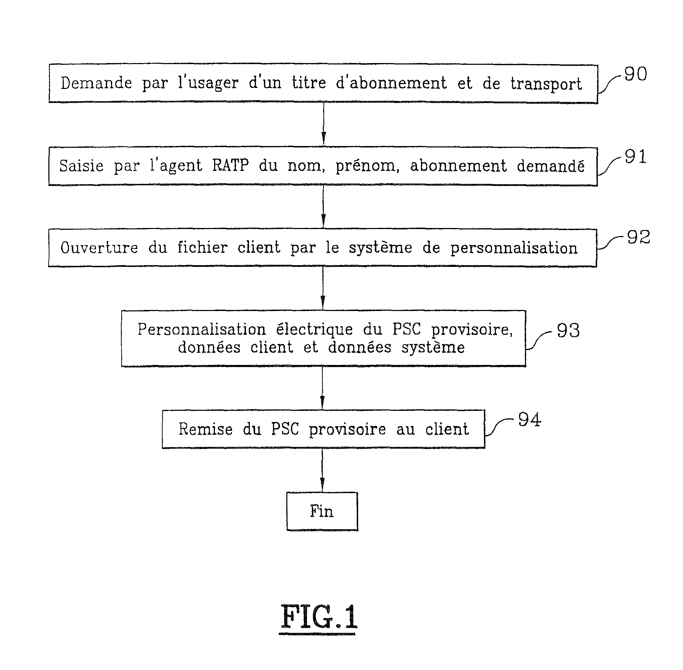

On va d'abord décrire le premier mode de dissociation des étapes (dissociation dans le temps) selon la première variante, et selon le troisième mode (dissociation du contrôle), en référence à un exemple illustré aux figures 1, 2, 3, 4.

Pour cela, un usager G souhaitant acquérir un titre de transport doit suivre le processus indiqué dans les cases 90 à 94 de la figure 1. Il doit d'abord se rendre dans une station de personnalisation décrite infra parmi un ensemble de stations, chaque station étant décentralisée et disposée par exemple à un guichet d'un réseau de transport en commun.

Sur la demande de l'usager, on prépare un titre d'abonnement et de transport conformément à une caractéristique de la première variante préférée du procédé, selon laquelle, dans un premier temps, on effectue la saisie des informations et leur enregistrement sur une carte provisoire, et dans un deuxième temps, on réalise la prise de vue et la saisie numérique des données graphiques et leur impression sur la carte.

Dans l'exemple, c'est l'agent en tant que représentant de l'autorité qui saisit des informations relatives à l'usage. En l'occurrence, il s'agit d'informations sur l'abonnement (par exemple durée, parcours autorisé, fréquence) ainsi que le nom, prénom de l'usager. Les informations peuvent comprendre également une information relative à un droit à réaliser une photographie. Par ce .biais, l'autorité exerce un contrôle sur l'utilisation des moyens de saisie de données graphiques décrits infra et évite ainsi une utilisation abusive.

Selon une caractéristique du procédé, on attribue un numéro d'identification aux données graphiques et/ou aux informations et on les saisit de manière dissociée sous ce numéro.

Dans l'exemple, la station représentant également l'autorité ouvre un fichier et lui attribue automatiquement un numéro qui fait partie de ladite donnée d'identification, en mettant en oeuvre des moyens programmables décrits infra.

En variante, la donnée d'identification peut comprendre un code personnel émis par l'autorité et porté à la connaissance de l'usager. Ce code personnel lui sera demandé ultérieurement pour être autorisé à faire la prise de vue. Par ce biais, l'autorité est assurée que la prise de vue est faite par une personne autorisée, en l'occurrence celle qui a payé les droits et qui a reçu le code personnel.

Ensuite, l'agent procède à l'enregistrement du fichier complet contenant les informations qu'il a saisies ainsi que les informations attribuées dans la puce d'une carte dite provisoire, réalisant ainsi sa personnalisation électrique. Les informations sont ensuite stockées en tant qu'archives.

Cette carte dite provisoire est remise au client. Elle donne les mêmes droits qu'une carte définitive sans avoir à attendre la mise en oeuvre des étapes correspondant à la personnalisation graphique. On utilise de manière avantageuse une carte du type sans contact dit PSC, celle-ci permettant à l'usager de passer rapidement des portes de contrôle d'accès.

Ensuite selon une caractéristique finale de la première variante du procédé visée précédemment, on réalise la prise de vue et la saisie numérique des données graphiques et leur impression sur la carte définitive.

Selon une autre caractéristique avec dissociation dans le contrôle, au moins la prise de vue et/ou la saisie numérique des données graphiques correspondantes sont effectuées sous le contrôle de l'usager.

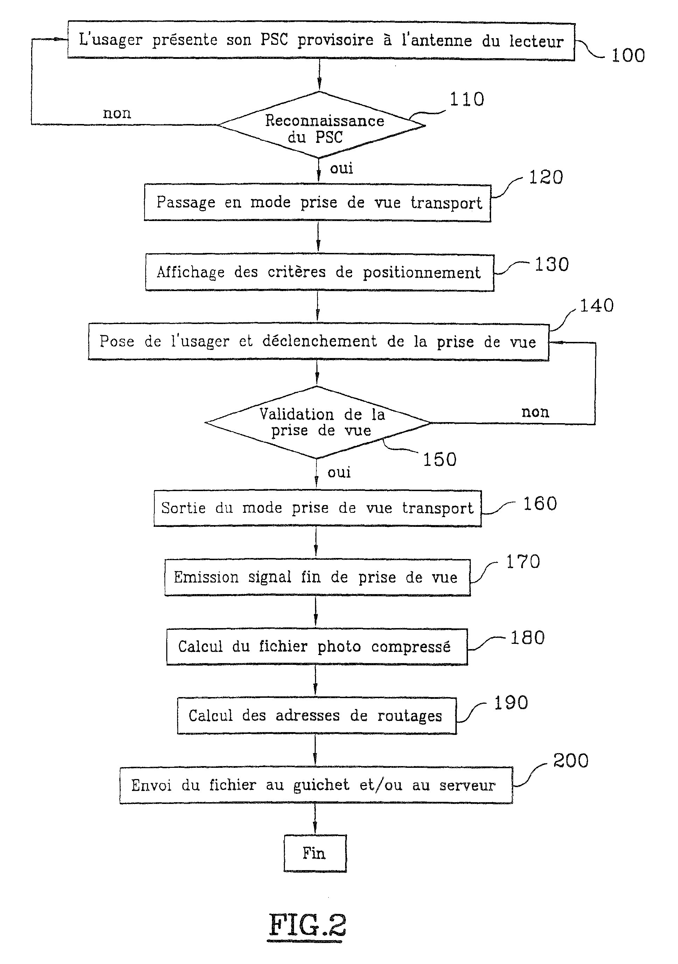

Il en résulte dans l'exemple que l'usager est invité à réaliser seul une prise de vue photographique, et à la saisir numériquement, sous son contrôle direct, dans l'une des cabines de prise de vue automatiques en libre service, telle que décrite également infra et fonctionnant selon un programme correspondant aux étapes illustrées à la figure 2.

Selon une autre caractéristique, le procédé comprend une étape selon laquelle on communique la donnée d'identification à l'autorité qui peut ainsi en vérifier la conformité avec la donnée préalablement archivée et autoriser la prise de vue et/ou la saisie des données graphiques.

Dans l'exemple, la donnée est communiquée automatiquement par une lecture de celle-ci sur la carte provisoire. Cela a l'avantage de reconnaître la carte et d'éviter des risques d'erreur dans la communication de cette donnée.

En variante, l'usager peut communiquer le code personnel à l'autorité via la cabine, lequel est comparé à celui enregistré dans la carte ou celui archivé. En cas de conformité, l'autorisation est donnée à l'usager. Cela a l'avantage de conforter la sécurité du système.

Selon une autre variante, l'autorisation peut être donnée également par lecture d'un droit à réaliser une prise de vue, préalablement enregistré dans la puce.

Selon une autre variante, l'agent peut remettre à l'usager un jeton avec ou sans carte provisoire, ledit jeton comportant des données d'identification, un droit à réaliser une photographie, et des indications de routage.

Dans l'exemple, le numéro de dossier et une donnée relative au guichet émetteur sont lus et comparés à ceux attribués par l'autorité et qui ont été préalablement stockés.

A l'achèvement de la prise de vue, et selon une caractéristique du procédé, les données graphiques sont dans l'exemple saisies sous le numéro de dossier qui constitue une donnée d'identification, et mises à disposition directe de l'autorité par exemple en étant transmises, soit au guichet émetteur, soit à un serveur accessible depuis le guichet émetteur, où elles sont stockées comme l'ont été les informations précédemment.

Selon une caractéristique avantageuse, le procédé peut comprendre une étape consistant à compresser les données graphiques préalablement à leur transfert à distance et leur stockage. Cela permet de réduire le coût de transmission en cas de sites éloignés et de diminuer l'espace mémoire nécessaire pour chaque photographie numérique.

En variante, les données graphiques peuvent être stockées dans la puce de la carte provisoire, de préférence sous forme compressée, la carte étant ensuite apportée par l'usager à l'autorité. Cela permet notamment d'économiser une transmission et de l'espace mémoire d'un serveur. Il est à noter que les cartes provisoires peuvent être récupérées et réutilisées pour un autre usager après effacement de leur contenu. A cet effet, elles peuvent avoir une capacité mémoire plus importante que les cartes définitives.

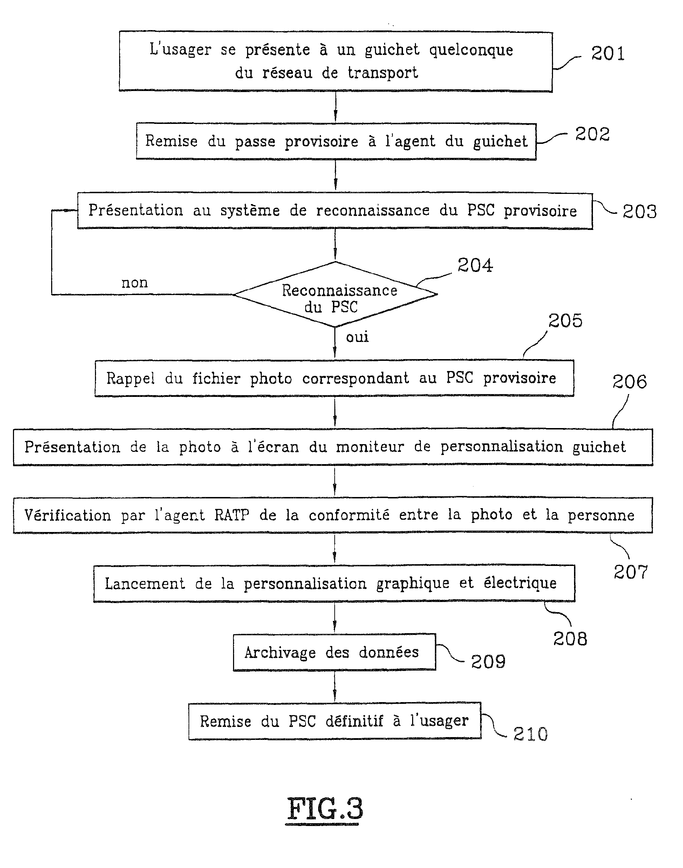

On va décrire maintenant, le retrait du PSC définitif en référence aux étapes 201 à 210 de l'organigramme de la figure 3.

L'usager doit se présenter au guichet émetteur du passe provisoire ou à un autre guichet apte à délivrer le passe définitif. Il remet ensuite le PSC provisoire à l'agent qui le présente à un système de reconnaissance compris dans la station de personnalisation décrite infra.

Selon une caractéristique du procédé, on rappelle au moins les données graphiques pour effectuer la personnalisation. Dans l'exemple, ce rappel s'effectue automatiquement à l'aide d'un programme dont les étapes essentielles sont décrites ci-après.

A l'étape 204, ce système lit le passe provisoire qui lui est présenté, reconnaît un numéro de fichier et à l'étape 205 rappelle le fichier correspondant contenu dans la carte provisoire ou transmis préalablement par la cabine de prise de vue automatique en libre service, ledit fichier étant mémorisé sur place au guichet ou dans un serveur.

Conformément à l'invention, le procédé peut comporter une étape consistant à visualiser au moins les données graphiques et à les comparer avec le visage de l'usager pour vérifier que le porteur est bien la personne qui a réalisé la photographie, avant de personnaliser la carte définitive.

En variante, l'agent peut vérifier la cohérence des données relatives à l'usager telles que son nom, en comparant le nom figurant sur la carte d'identité du porteur à celui qui est enregistré. Dans le cas où la donnée d'identification comporte un code personnel, l'agent peut demander au porteur de lui communiquer ce code. L'agent compare alors ce numéro à celui apparaissant sur le moniteur. Il est à noter que cette comparaison peut se faire automatiquement.

Dans l'exemple, le programme de rappel du fichier provoque à l'étape 205 la présentation du visage de l'usager sur un moniteur à disposition de l'agent.

En cas de conformité constatée par l'agent, celui-ci lance la personnalisation graphique et électrique, archive éventuellement les données dans la mémoire d'un ordinateur central par exemple, remet le passe définitif à l'usager.

Le procédé pour la personnalisation d'un titre de transport est alors terminé.

Selon un mode de dissociation dans le contrôle particulièrement avantageux l'ensemble des étapes de saisie peut s'effectuer en libre service automatiquement sous le contrôle direct de l'usager, l'autorisation étant dans ce cas conditionnée à un paiement, tandis que la personnalisation graphique et électrique s'effectue sous le contrôle indirect de l'autorité par l'intermédiaire de la cabine. Le cas échéant, les données peuvent également être transférées à l'autorité pour archivage afin de permettre une campagne de personnalisation ultérieure.

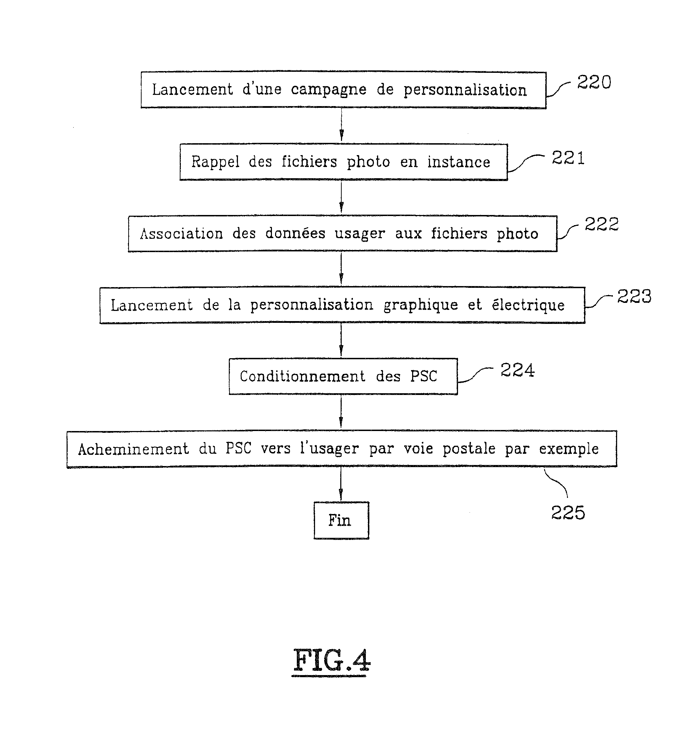

Selon un exemple de dissociation dans le temps, dans l'espace et dans le contrôle permettant une campagne de personnalisation, notamment pour un renouvellement de carte, on réalise dans un premier temps la saisie des données graphiques sous ladite donnée d'identification, sur un premier site et sous le contrôle indirect de l'usager (chez un photographe par exemple) que l'on transfère à l'autorité pour stockage, puis dans un deuxième temps, l'autorité effectue la saisie des informations sous ladite donnée d'identification, sur un deuxième site, et on réalise dans un troisième temps l'impression et l'enregistrement sous le contrôle de l'autorité et sur éventuellement un troisième site. Une telle campagne est décrire infra en référence à la figure 4 décrite infra.

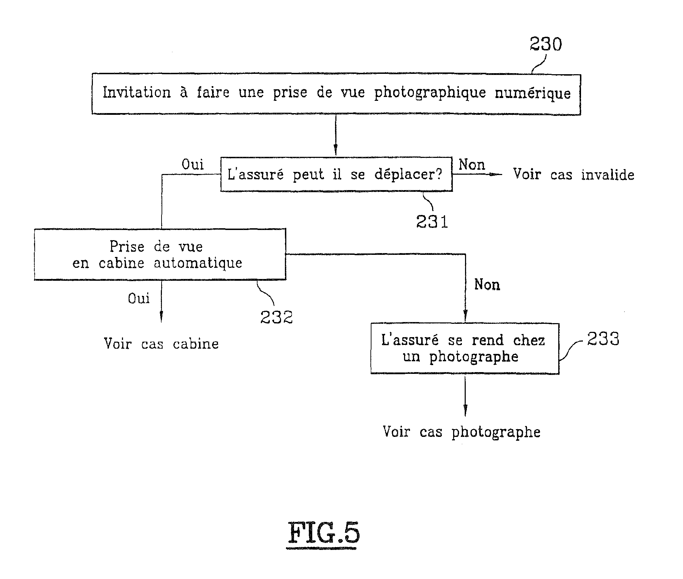

On va décrire maintenant le procédé de l'invention suivant un mode de mise en oeuvre tel qu'il est utilisé dans la réalisation de la carte santé, en référence aux figures 5 à 8.

Le procédé est mis en oeuvre dans cette application avec dissociation dans l'espace et dans le temps selon la deuxième variante préférée.

On rappelle que selon l'invention au moins la prise de vue de données graphiques et/ou leur saisie numérique est dissociée des étapes restantes.

Dans l'exemple, ce sont la prise de vue et la saisie numérique que l'on dissocie dans le temps et dans l'espace des étapes restantes.

Pour cela, l'autorité représentée par exemple par une caisse d'assurance maladie, doit saisir de son côté des données sur l'assuré qui sont déjà en sa possession, ou qu'elle devra élaborer afin qu'elles soient utilisables ultérieurement pour la personnalisation de la carte. Ce sont par exemple le numéro d'assuré social, les données relatives à l'assuré, et un droit à des prestations.

Ensuite, le numéro d'assuré social ou un jeton donnant droit à une prise de vue est fourni à l'assuré pour lui permettre de réaliser sa photographie.

Différentes possibilités illustrées à l'organigramme de la figure 5 lui sont offertes. Il peut réaliser la prise de vue et la saisie numérique des données graphiques sous le contrôle de l'un des photographes agréés par l'autorité et installés de manière décentralisée, ce qui constitue un contrôle indirect de l'autorité sur cette étape.

Il peut également la réaliser seul dans l'une des cabines automatiques décentralisées décrite infra sous le contrôle indirect de l'autorité par l'intermédiaire de la cabine.

Dans le cas où il ne peut pas se déplacer (cas d'un invalide), la prise de vue et/ou la saisie peuvent être réalisées comme expliqué infra.

Comme dans l'exemple précédent, la réalisation de la carte santé comprend une étape selon laquelle, on communique une donnée d'identification à l'autorité qui autorise la prise de vue et/ou la saisie après avoir vérifié sa conformité avec la donnée saisie par elle initialement.

Dans ce cas, il s'agit du numéro d'assuré social et éventuellement le nom de l'assuré. Cette étape permet d'authentifier l'assuré social et lui donne le droit d'intervenir dans les étapes de mise en oeuvre du procédé, notamment d'avoir sa photographie saisie.

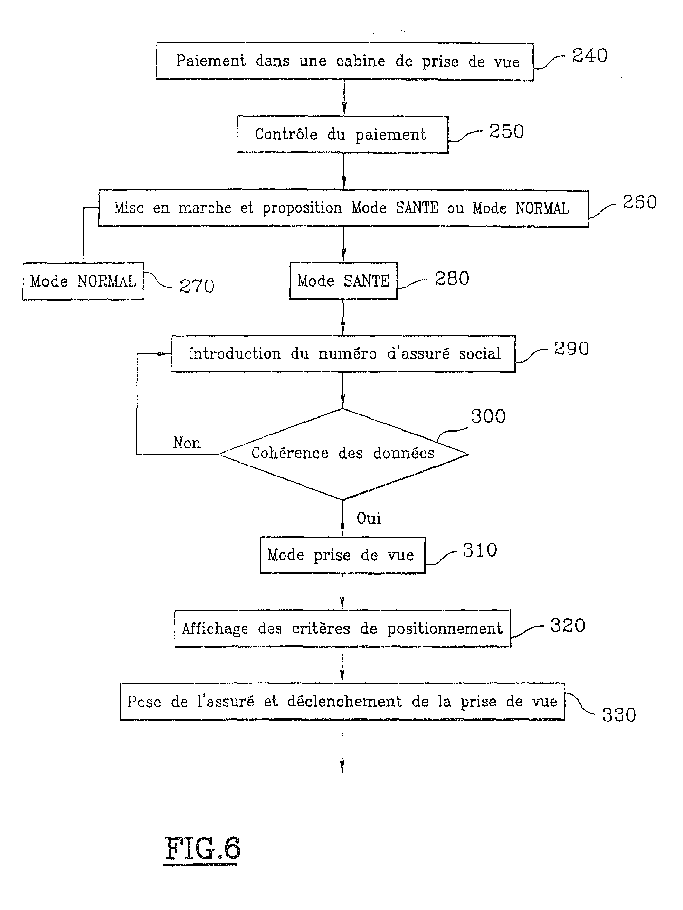

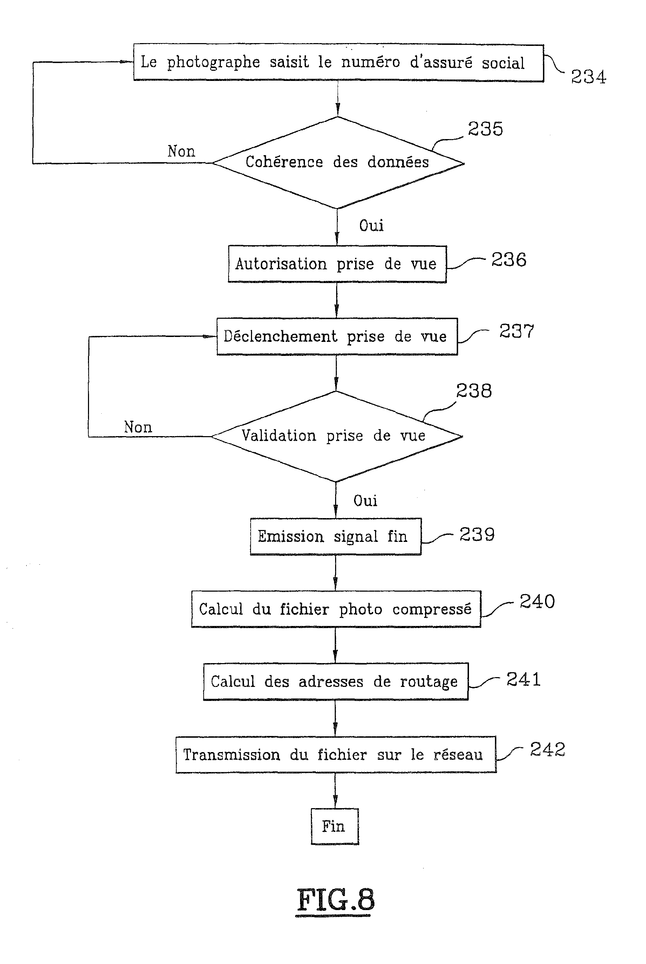

Ensuite, la prise de vue et la saisie numérique sont effectuées selon les cas ci-dessus en mettant l'équipement du photographe (figure 8) ou de la cabine (figure 6) en fonctionnement. Ce fonctionnement est décrit infra.

Ensuite, conformément à une caractéristique de l'invention, les données graphiques numériques saisies sont mises à disposition de l'autorité en étant transférées à distance, puis stockées dans un espace mémoire d'un ordinateur central ou un serveur dont l'accès est réservé à l'autorité ou une société agissant pour son compte.

Conformément à une caractéristique, le procédé comprend de préférence une étape préalable au transfert et au stockage consistant à compresser les données graphiques saisies, cette étape étant recommandée pour réduire les frais de transmission et l'espace mémoire nécessaires, sachant que dans ce cas, les sites de saisie et de mise à disposition sont nécessairement éloignés, et sachant qu'il s'agit de stocker un grand nombre de données graphiques exigeant beaucoup d'espace mémoire.

Ensuite, conformément à un mode de mise en oeuvre du procédé avec dissociation dans le temps, l'autorité rappelle les informations et les données graphiques numériques par l'intermédiaire de ladite donnée d'identification, pour réaliser la personnalisation graphique et électrique.

Cela a pour effet d'associer ensemble les données graphiques aux informations, celles-ci ayant été saisies de manière dissociée dans le temps et dans l'espace.

La personnalisation peut être réalisée en petite série au fur et à mesure ou en grande série.

Dans le cas d'un invalide, le photographe peut se déplacer à domicile avec un équipement portable de prise de vue et de saisie numérique comprenant les mêmes fonctions que son équipement fixe à demeure.

Les données graphiques peuvent être transmises ensuite à l'autorité depuis son équipement fixe.

La saisie numérique peut également s'effectuer par scannérisation à partir d'une prise de vue photographique ou d'un négatif constituant des données graphiques non numériques, lesquelles sont fournies par l'assuré social.

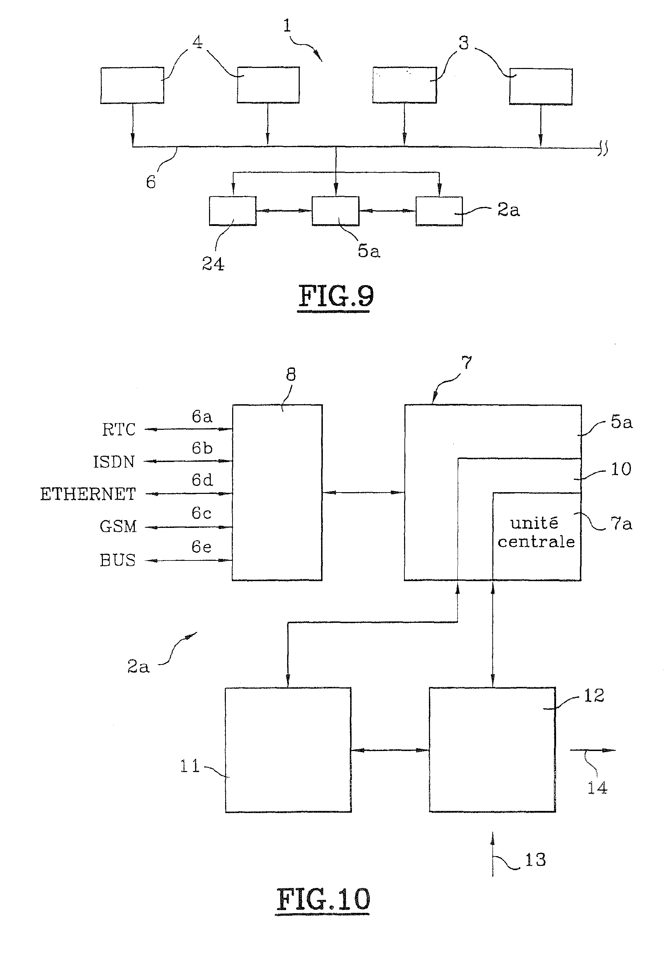

On va décrire maintenant, les différents moyens aptes à mettre en oeuvre le procédé de l'invention en référence aux figures 9 à 16.

Selon un mode de réalisation, on décrit tout d'abord à la figure 9, une installation 1 utilisable pour réaliser notamment la carte santé. Elle comprend au moins une station de personnalisation dite grande série 2a et une pluralité de stations de prise de vue décentralisées manuelles 3 (chez un photographe), ou automatiques 4, et un moyen de stockage et de distribution de données 5a.

Chaque station de prise de vue dispose d'une liaison de communication 6 avec le moyen. 5a de stockage et de distribution de données graphiques, par exemple un serveur, de manière à pouvoir transmettre les données graphiques et le cas échéant recevoir un signal d'autorisation de la prise de vue. Cette liaison peut être faite également avec l'unité mémoire 5a d'un ordinateur central 7 de la station de personnalisation grande série 2a. Cette liaison est de préférence toute liaison de télécommunication.

En variante, l'installation peut comporter le cas échéant également une station de personnalisation petite série 24.

Selon l'invention, la station de personnalisation 2a comporte au moins un moyen de saisie 10 pour saisir lesdites informations numériquement, au moins une imprimante graphique 11 pour personnaliser graphiquement ladite carte à partir desdites données graphiques numériques, au moins un moyen d'enregistrement 12, pour enregistrer lesdites informations dans ledit support, au moins une unité centrale 7a pour piloter ces moyens.

Dans l'exemple, illustré schématiquement à la figure 10, la station de personnalisation grande série 2a est disposée par exemple chez un fabriquant de cartes agrée par l'autorité. Elle comporte une interface de communication 8 avec différents réseaux de télécommunication 6a à 6e, un ordinateur 7 comportant une unité centrale 7a, une unité mémoire 5a, un clavier 10, et les moyens de personnalisation 11, 12. Le moyen 12 d'enregistrement dans la puce de la carte englobe tout moyen connu de l'homme de l'art apte à enregistrer des données dans une puce électronique dans le cas d'une carte à puce, ou un moyen connu de l'homme de l'art apte à magnétiser une piste magnétique dans le cas d'une carte à piste magnétique. Un dispositif d'alimentation en cartes et un dispositif de délivrance schématisé respectivement par les flèches 13, 14, sont également prévus.

Selon l'invention, chaque station de prise de vue est apte à saisir numériquement une prise de vue de données graphiques correspondant au visage de l'usager, à saisir une donnée d'identification pour les données graphiques et/ou lesdites informations, à transférer à distance les données graphiques pour stockage dans au moins ledit moyen de stockage et de distribution de données.

Dans l'exemple, ces stations sont disposées chez des photographes qui opèrent manuellement et dans des cabines automatiques en libre service disposées notamment dans des zones commerçantes. Ces cabines sont décrites ultérieurement.

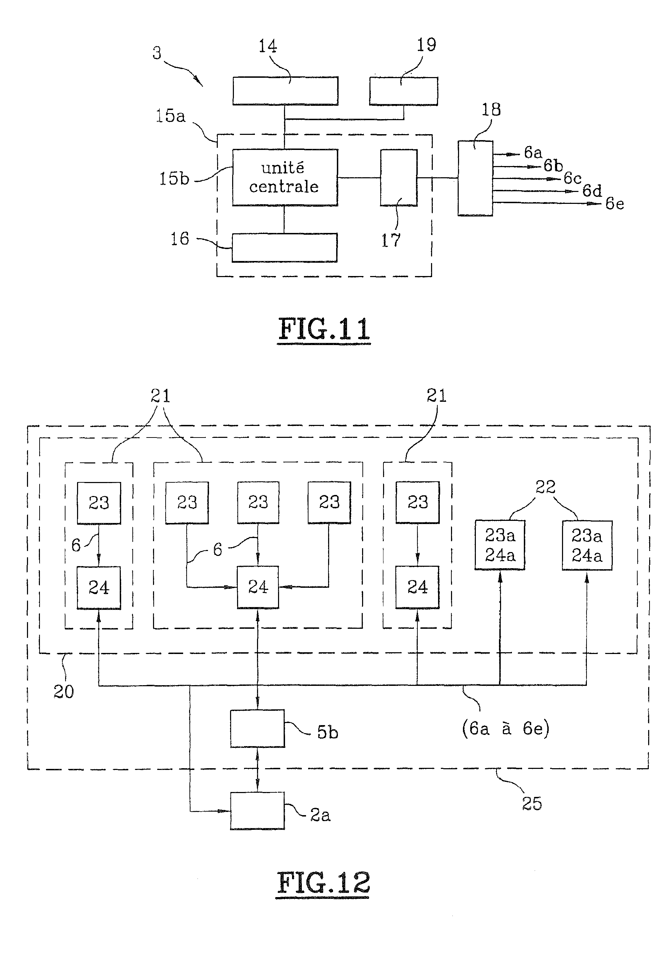

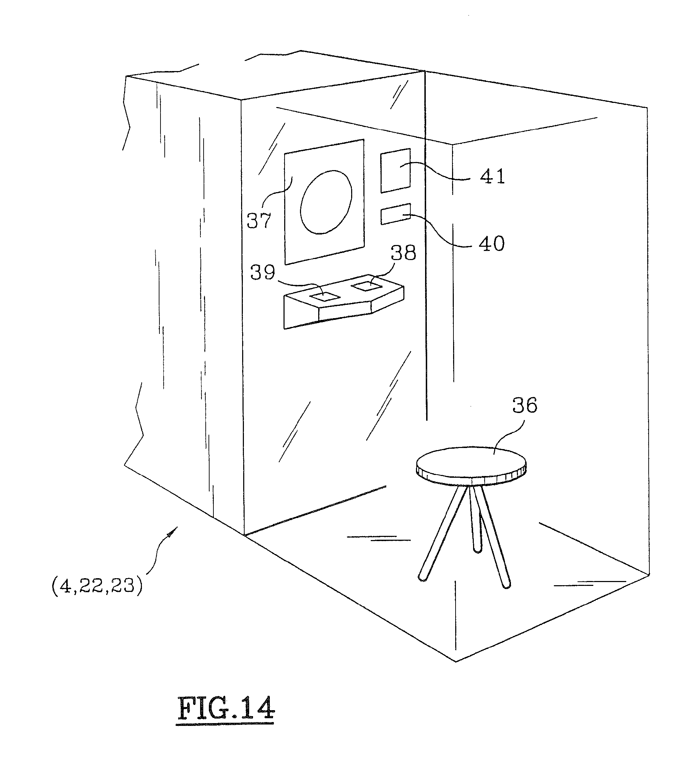

La station du photographe illustrée à la figure 11 est équipée d'une caméra vidéo 14 avec capture image ou d'un appareil photographique numérique associé avec un micro-ordinateur 15a de type "PC" comportant une unité centrale 15b un clavier 16 pour saisir une donnée d'identification et une interface de télécommunication 18 pour transmettre des données sur les réseaux 6a à 6e.

Selon une caractéristique de ce mode de réalisation, la station de prise de vue comprend de préférence un moyen 17 de compression de données, par exemple sous forme d'un algorithme de compression, installé dans une mémoire programme du micro-ordinateur. Ainsi, il est possible de compresser des données graphiques préalablement à leur transmission automatique vers la station de personnalisation ou le serveur concerné.

Selon une caractéristique de ce mode de réalisation, l'ordinateur central 7 de préférence ou le serveur 5a peut comporter un programme de contrôle apte à vérifier la conformité de la donnée d'identification et à autoriser la saisie des graphiques.

L'utilisation de ce programme est décrit infra en référence à l'organigramme de la figure 6 ou 8.

Le cas échéant, selon une autre caractéristique de ce mode de réalisation la station de prise de vue du photographe peut comprendre un « scanner » 19 apte à saisir une prise de vue sur négatif ou sur papier photographique.

Selon une variante, la station entière du photographe peut être portable. Elle peut comprendre par exemple un PC portable avec un modem, et un appareil photographique numérique, la liaison s'effectuant par téléphone ou radiotéléphone, ou par tout autre moyen approprié.

On va décrire maintenant une installation apte à être utilisée notamment pour la réalisation de la carte transport à l'appui de la figure 12.

Selon un autre mode de réalisation de l'invention, on dispose une pluralité 20 d'installations autonomes 21, 22 décentralisées sur le réseau de transport en commun.

Chaque installation comporte au moins une station de prise de vue 23 reliée par une liaison de communication 25 à une station de personnalisation 24 dit de petite série pour transmettre au moins les données graphiques. Les stations 23, 24 peuvent être séparées ou réunies ensemble dans une cabine automatique 22.

Chaque station de prise de vue est dans cet exemple disposé à proximité du guichet où se trouve la station de personnalisation correspondante.

La liaison de communication 25 peut être de nature vidéo les données étant numérisées au guichet; Dans l'exemple, elle est informatique, les données graphiques étant de préférence numérisées dans la station de prise de vue.

On va décrire maintenant une installation autonome et unitaire 21 pour la réalisation d'un titre d'usager personnalisé infalsifiable.

Selon l'invention, une telle installation autonome et unitaire comprend au moins une station de prise de vue comportant un moyen de saisie numérique de données graphiques, au moins un moyen de saisie numérique des informations, au moins un moyen de stockage et de distribution de données, au moins une imprimante graphique pour personnaliser graphiquement ladite carte à partir desdites données graphiques numériques, au moins un moyen d'enregistrement pour enregistrer lesdites informations dans ledit support, au moins une unité centrale pour piloter ces moyens.

Selon l'invention, cette installation est adaptée pour dissocier au moins la prise de vue et la saisie numérique de données graphiques des étapes restantes du procédé ci-dessus; et elle est également apte à mettre les données graphiques à disposition de l'autorité.

Dans cet exemple, et conformément à un mode de dissociation dans le contrôle, les moyens de prise de vue sont à disposition de l'usager et sous son contrôle dans des stations de prise de vue constituées par des cabines 23 disposées en libre service, tandis que les autres moyens sont disposés au guichet dans une station de personnalisation 24 à disposition de l'agent représentant l'autorité. Ainsi, dès que la prise de vue est effectuée, la cabine est apte à transmettre les données graphiques à la station de personnalisation via ladite liaison 6. De préférence ces données sont mémorisées momentanément à leur réception dans une unité mémoire (mémoire tampon) de la station par exemple jusqu'à ce qu'une prochaine prise de vue soit autorisée et reçue.

Dans le cas d'une cabine autonome 22, la station de prise de vue 23a et de personnalisation 24a étant réunies ensemble, la carte peut être réalisée immédiatement sur place si l'usager le souhaite. Dans ce cas, nous avons une dissociation dans leur contrôle comme ci-après.

Les moyens de prise de vue et de saisie numérique des données graphiques et des informations sont en libre service sous le contrôle de l'usager, celui-ci exerçcant son contrôle en pouvant refuser la prise de vue; tandis que l'autorité contrôle indirectement, par le biais de la cabine, l'autorisation de la prise de vue (qui peut être par exemple soumise à une condition de paiement, ou à la communication d'un code secret personnel), la saisie des informations par le biais d'un menu offrant un choix d'informations préétablies, et la personnalisation graphique et électrique.

Ainsi, dès la prise de vue, les données sont saisies automatiquement, c'est à dire mémorisées momentanément, par exemple jusqu'à effacement par de nouvelles données graphiques, et transférées par connexion informatique interne de la cabine au moyen de personnalisation interne 24a.

A la figure 12, on voit une installation générale 25 en variante améliorée constituée par une pluralité d'installations unitaires. Dans ce cas, les stations de personnalisation 24, 24a sont montées en réseau entre elles par le biais d'une liaison de communication (6a à 6e) de sorte que cela leur permet d'échanger des données entre elles.

Grâce à cela, il peut y avoir une dissociation des étapes dans l'espace et dans le temps à condition toutefois selon l'invention, que chaque installation soit apte à attribuer une donnée d'identification aux données graphiques et/ou aux informations, et à les stocker dans les moyens de stockage et de distribution sous ladite donnée d'identification, l'accès aux moyens de stockage étant réservé à l'autorité, et à les rappeler par l'intermédiaire de ladite donnée.

Dans le cas de cabines autonomes, l'installation générale délivre un code personnel à l'usager en cas de dissociation des étapes. La reprise ultérieure des étapes, suite par exemple à une interruption volontaire de l'usager par manque de temps, est conditionnée par la communication ce code personnel, la cabine effectuant un test de conformité du code reçu avec celui stocké en mémoire de la carte ou en mémoire du système.

En variante encore améliorée, l'installation générale peut comporter également un ordinateur central commun ou un serveur commun 5b monté en réseau avec les stations de personnalisation et/ou avec les stations de prise de vue et également une station de personnalisation grande série 2a qui peut être reliée soit au réseau 25 et/ou soit au serveur 5b. Cette installation est adaptée pour effectuer une campagne de renouvellement de carte.

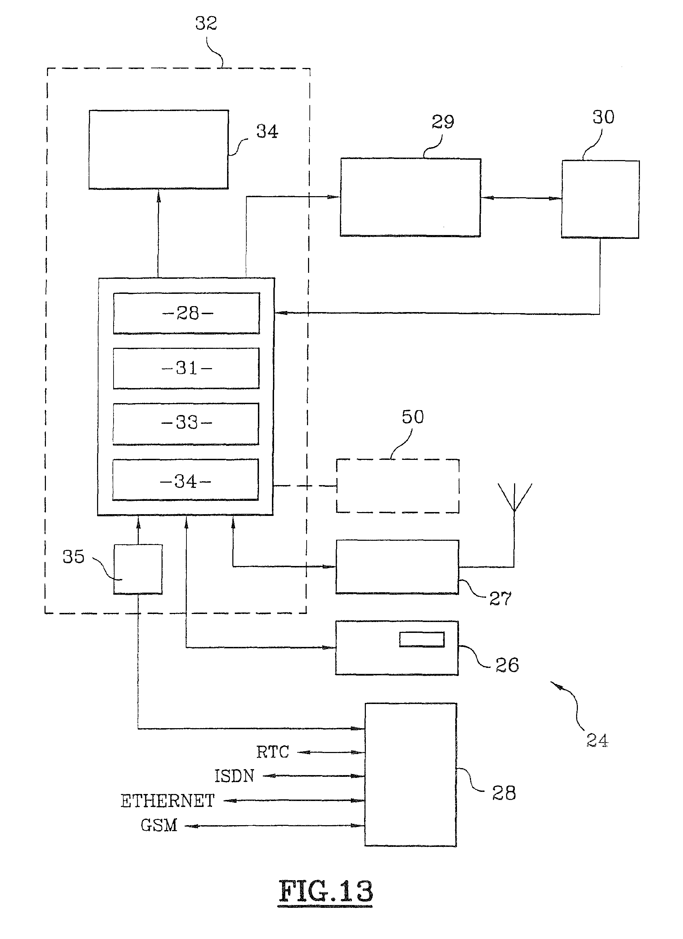

On va décrire maintenant une station de personnalisation petite série telle qu'elle existe au guichet à l'appui de la figure 13.

Selon une caractéristique de l'invention, chaque station de personnalisation de petite série 24 comporte un moyen de saisie d'informations 31, 32, 33, un moyen de stockage et de distribution de données, des moyens d'impression, un moyen d'enregistrement 30 pour enregistrer lesdites informations dans ledit support, une unité centrale 31 pour piloter ces moyens.

Dans l'exemple, la station de personnalisation illustrée à la figure 13 comporte une imprimante graphique 29, une interface de personnalisation électrique 30, un micro-ordinateur 32 comportant un clavier 33, et une unité centrale 31, un moyen de stockage étant par exemple constitué d'une unité mémoire 5c du micro-ordinateur. Elle comporte également et avantageusement au moins une interface de communication à distance pour transmettre sur différents réseaux : 6a à 6e par exemple RTC, ISN, ETHERNET, GSM ou autre tel un bus informatique.

Conformément à une autre caractéristique, la station de personnalisation petite série comporte également un moniteur 34 pour visualiser les données graphiques.

Conformément à une autre caractéristique, la station de personnalisation petite série comporte également un lecteur de carte 26, 27. Elle peut comporter également deux types de lecteur de carte à puce 26, 27 avec et sans contact. Ces lecteurs servent notamment à lire la donnée d'identification qui permettra d'associer les données graphiques aux données d'enregistrement.

Avantageusement, chaque station de prise de vue 23 comporte également des moyens de compression de données 35.

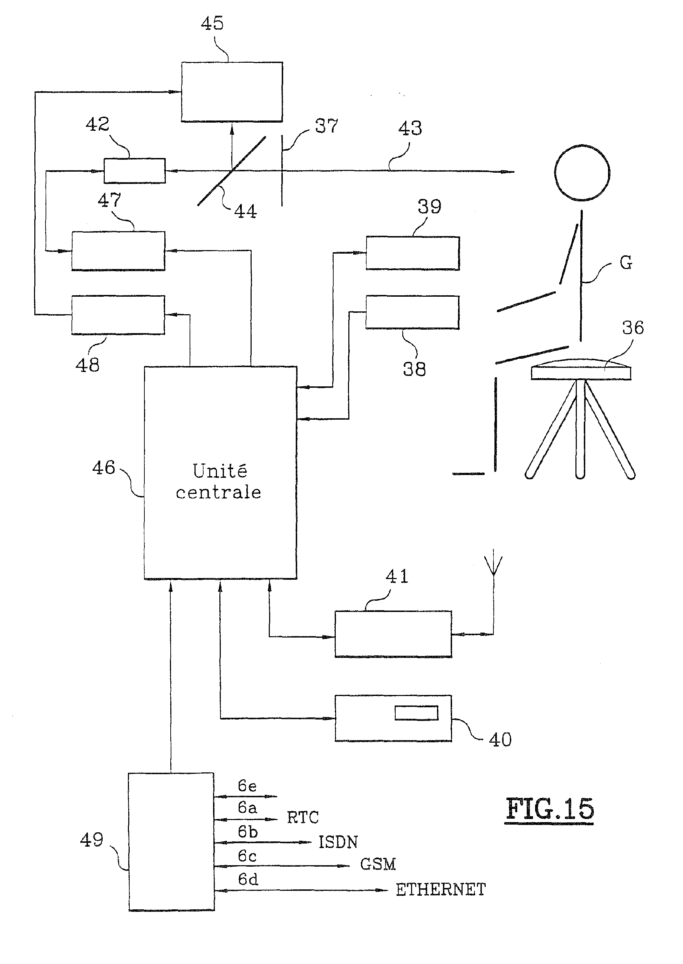

On décrit maintenant chaque cabine de prise de vue conforme à l'invention à l'appui de la figure 14.

Chaque station de prise de vue comporte au moins les moyens de la station de prise de vue décrite précédemment dans l'application carte santé.

Dans l'exemple, la station de prise de vue 23 est disposée dans une cabine automatique 22 du type décrit dans la demande de brevet français No. 92 04041 du 30 mars 1992. Comme schématisée sur la figure 14, elle comporte un siège 36 sur lequel s'assoit l'usager de manière à faire face à une glace 37 disposée dans une paroi de la cabine. Cette cabine comporte un panneau de commande comprenant un clavier numérique 38 et un clavier de navigation 39 ou tout moyen d'entrée de données équivalent. La cabine est également équipée d'un lecteur de carte à puce 40 et d'une antenne 41 de lecture sans contact du passe.

La figure 15 est un schéma synoptique de l'équipement de cette cabine.

On retrouve le siège 36 sur lequel l'usager G est assis avec son visage au niveau de la glace derrière laquelle se trouve une caméra numérique 42 dont l'axe optique 43 est horizontal et dirigé vers le visage de l'usager. Un miroir semi-réfléchissant 44 est disposé à 45 ° sur cet axe optique 43 de manière à projeter sur la glace 18 une image fournie par un moniteur 45 qui visualise l'image prise par la caméra 42.

Un ordinateur 46 gère la caméra 42, le moniteur 45, le clavier numérique 38, le clavier de navigation 39, une carte de numérisation 47, une carte vidéo 48, le lecteur de carte à puce avec contact 40, le lecteur de carte à puce sans contact 41 et une interface de transmission de données 49 reliée à un réseau 6a à 6e.

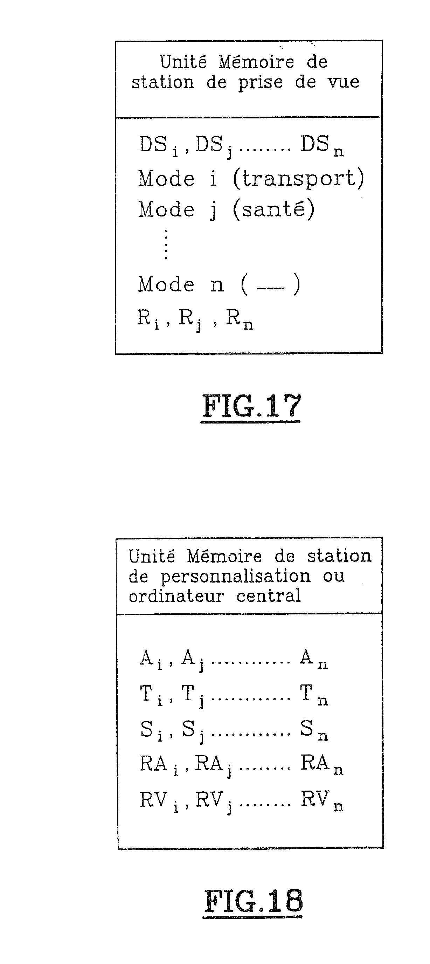

Cette cabine est adaptée à la mise en oeuvre du procédé selon l'invention. Les éléments spécifiques à l'invention sont notamment les deux lecteurs 40 et 41, l'interface de transmission de données 49, le cas échéant un moyen 35 de compression de données graphiques, et un logiciel de fonctionnement chargé dans une mémoire programme de l'ordinateur 46, illustrée à la figure 17.

Selon un mode de réalisation, une mémoire de l'unité centrale de chaque station de personnalisation ou l'ordinateur central commun à la pluralité de station peut comporter un programme de calcul Ai, apte sur commande à attribuer une donnée d'identification pour chaque usager et de l'associer aux données graphiques et/ou aux informations pour la saisie. Il peut s'agir par exemple de tout programme d'attribution d'un numéro d'ordre de type connu.

Un tel programme est nécessaire notamment pour l'attribution d'un numéro d'ordre qui tiennent compte de l'ensemble des fichiers créés.

L'unité centrale ou l'ordinateur central commun comporte également et de préférence, au moins un programme de contrôle apte à vérifier par un test (Ti), la conformité de la donnée d'identification et autoriser et/ou déclencher la prise de vue et/ou la saisie des données graphiques par exemple par émission d'un signal (Si) d'autorisation et/ou de déclenchement, au moins un programme de rappel (Ri) des données graphiques et/ou des informations par le biais de ladite donnée d'identification, un programme de rappel (RVi) comportant une étape consistant à visualiser au moins les données graphiques sur le moniteur. Tous ces programmes pris isolément sont de type connu.

Selon une caractéristique, les cabines peuvent comporter un dispositif de déclenchement apte à déclencher un mode spécifique de fonctionnement tel que décrit infra.

Un tel dispositif peut être constitué par un dispositif mécanique, ou électrique ou un programme (DSi) apte à détecter un signal de validation émis par une carte à puce ou émis par un ordinateur central mettant en oeuvre le test (Ti) de reconnaissance de données.

Dans l'exemple on a recours au programme (Dsi) de type connu décrit infra en référence aux organigrammes.

Selon une variante avantageuse, l'installation générale 25 de la figure 12 peut comporter également une station de personnalisation grande série 2a en liaison de communication avec ledit serveur ou l'ordinateur central. Ainsi, il est possible d'effectuer une campagne de personnalisation rapidement.

Chaque station de personnalisation petite série ou de prise de vue peut comporter un « scanner » 50 apte à saisir une prise de vue tirée sur un négatif ou du papier photographique.

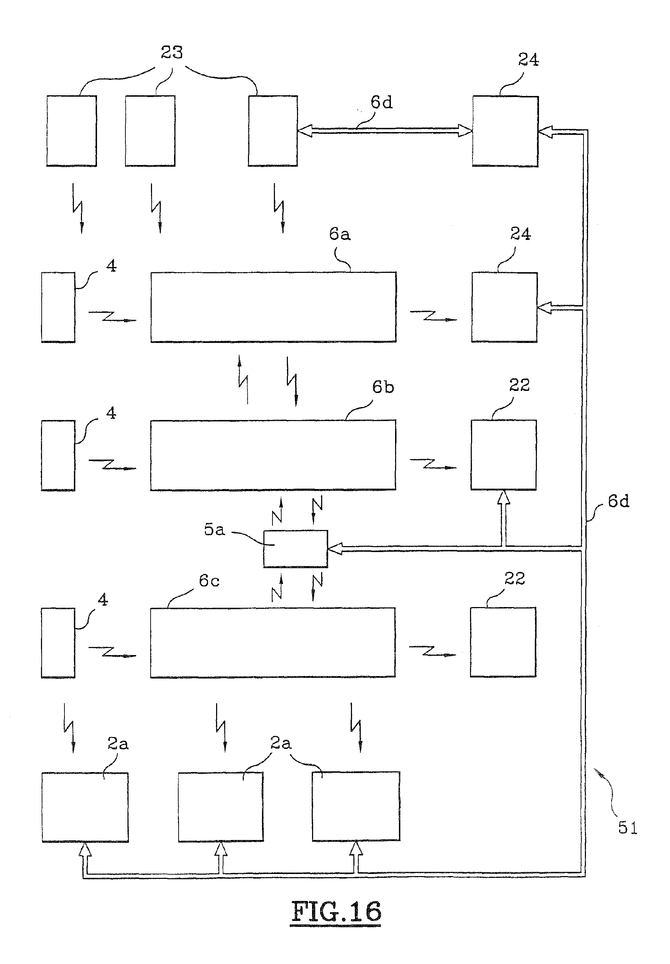

La figure 16 illustre un mode de réalisation préféré d'une installation générale 51 comportant l'ensemble des moyens décrits précédemment et permettant la réalisation de tout type de carte (santé, bancaire, transport...). Ces moyens peuvent communiquer entre eux par l'intermédiaire d'un ou plusieurs réseaux de télécommunication 6a à 6e.

Grâce à la pluralité des stations de prise de vue disposés près de l'usager en libre service 22 et/ou semi-libre service 23 près du guichet de délivrance de carte ou tout autre endroit public, et des stations de personnalisation 22, 24 réparties également près du client selon deux modes de réalisation, ou bien centralisées chez un fabricant 2a selon un autre mode de réalisation, lesdits moyens de personnalisation 2a, 24, 24a étant montés en réseau ensemble et/ou reliés à un ordinateur central 5a, il est possible de réaliser rapidement un nombre important de cartes personnalisées par exemple 5 millions, avec le minimum de contrainte de lieu et de temps pour l'usager tout en lui permettant de choisir sa photographie.

En outre, cette installation permet d'éviter d'avoir des frais de tirage de la photographie sur du papier, ou toute manipulation de photographie sur papier et erreurs résultantes.

L'usager peut obtenir un titre de transport à n'importe quel guichet; il peut faire sa photographie à n'importe quelle cabine de prise de vue automatique ou semi-automatique.

Dans le cas d'un titre provisoire, il peut également l'obtenir à n'importe quel guichet et retirer son titre définitif à n'importe quel guichet même distinct de celui qui a émis le titre provisoire.

Avantageusement, chaque station de personnalisation ne peut démarrer qu'après lecture d'une carte d'autorisation détenue par l'agent du réseau de transports assortie éventuellement d'une procédure d'authentification de l'agent, de type connu et disposé dans l'unité mémoire d'une unité centrale.

On va décrire maintenant le fonctionnement de la cabine de prise de vue automatique qui utilise un programme illustré à l'organigramme de la figure 2.

Pour initialiser le programme, à l'étape 100, l'usager présente son PSC provisoire aux moyens de lecture 41 de la cabine 22, 23 décrite supra.

A l'étape 110, on procède à la reconnaissance du PSC; pour cela, le lecteur lit les informations et l'ordinateur 46 vérifie parmi ces informations la présence d'un droit à effectuer une photographie, par exemple une information codée. En cas d'absence de droit, le programme se boucle sur l'étape initiale, et en cas de présence, il se branche à l'étape 120.

A cette étape, le programme fait passer la cabine dans un mode de fonctionnement spécifique à l'application, par exemple dans ce cas, un mode transport et se branche à l'étape 130.

Ce mode n'offre qu'un format de prise de vue unique par opposition au mode normal de la cabine où de nombreuses options sont offertes (photographie d'amusement, photographies multiples, formats multiples, noir et blanc ou couleurs, etc..).

On peut prévoir que l'usager paie l'usage de la cabine de prise de vue automatique en libre service. Le paiement de la prise de vue peut également s'effectuer en même temps que le paiement de l'abonnement, lors de l'établissement du passe provisoire. On peut aussi payer la prise de vue par exemple au moyen d'un jeton fourni avec le passe provisoire par l'agent au guichet.

Ensuite, on voit sur l'organigramme que l'usager est guidé par un logiciel propre à la prise de vue conformément aux étapes 130 à 150. Selon ces étapes successives, le logiciel affiche les critères de positionnement, invite l'usager à se positionner correctement et à poser pour la prise de vue, à utiliser le clavier de navigation 39 et à appuyer sur un bouton de déclenchement de la prise de vue quand il est prêt.

La photographie prise est montrée sur la glace 37 à l'usager au moyen du moniteur 45 et du miroir 44 et le programme lui donne le choix de refaire une autre prise de vue si la photographie ne lui convient selon une boucle entre l'étape 140 et 150. Lorsque la photographie lui convient et que l'usager valide la prise de vue à l'étape 150 (branche oui), le programme se branche à l'étape 160.

A cette étape, le programme fait sortir la cabine du mode transport, et transmet un signal de fin de prise de vue à l'usager selon l'étape 170.

Le programme comprend de préférence, à l'étape 180, un sous programme C selon lequel, les données sont compressées et associées à des informations d'identification lues sur le passe provisoire au cours de sa présentation; il se branche ensuite à l'étape 190.

A cette étape, le programme calcule des adresses de routage et se branche à l'étape 200.

A cette étape, le programme transmet le fichier par l'interface de transmission de données 49 à la station de personnalisation du guichet émetteur du PSC ou à un serveur spécialisé sous contrôle de la société de transport.

La saisie des données de portrait à l'aide de la cabine de prise de vue est alors terminée, celle-ci ayant été effectuée conformément à l'invention partiellement sous le contrôle direct de l'usager et partiellement sous celui de l'autorité.

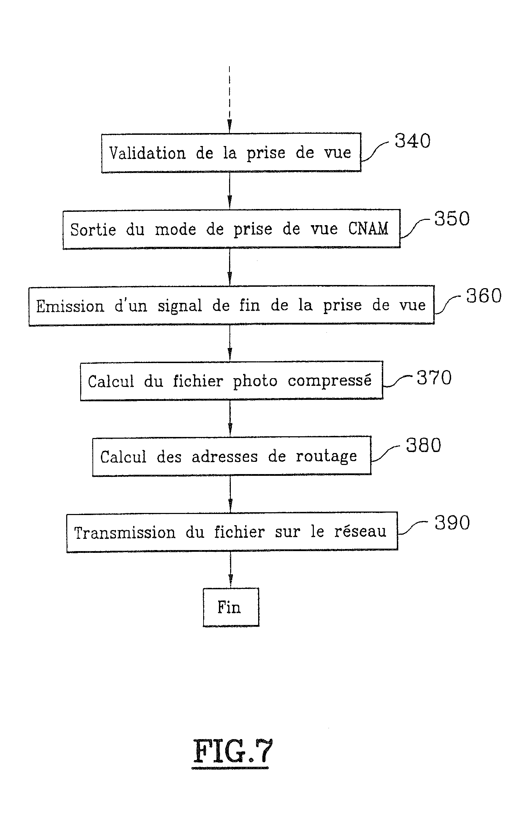

On va décrire maintenant le fonctionnement de la cabine de prise de vue, mettant en oeuvre un programme selon le procédé de l'invention, appliqué à la réalisation de la carte santé à l'appui de l'organigramme des figures 6 et 7.

L'assuré se rend dans une cabine automatique 22, la prise de vue en libre service comporte une étape de paiement 250 par les moyens spécifiques de paiement de la cabine 40. Lorsque le paiement est effectué, le logiciel spécifique à l'invention pour cette application se branche à l'étape 260.

A cette étape, le programme propose selon un choix entre le mode normal de la cabine de prise de vue automatique en libre service et un mode santé spécifique pour une caisse d'assurance maladie. En cas de sélection du mode normal, le logiciel se branche sur ce mode à l'étape 270, et dans le cas contraire, il se branche à l'étape 280 en mode santé, et passe à l'étape suivante 290.

A cette étape et en mode santé donc, le logiciel demande à l'assuré de rentrer son numéro d'identification par exemple d'assuré social, un message correspondant étant envoyé par exemple sur le moniteur 45 de la cabine. L'assuré introduit alors son numéro à l'aide du clavier numérique 38 valide la saisie et le programme se branche à l'étape de test 300.

A cette étape, un ordinateur central auquel sont reliés les moyens de prise de vue vérifie la cohérence des données. La cohérence des données peut également être vérifiée en local sur la base d'informations préalablement téléchargées par l'ordinateur central.

En absence de cohérence (branche non), un signal de refus est émis à destination de l'unité centrale 46 de la cabine et le programme de la cabine demande d'introduire un nouveau numéro et ainsi de suite selon une boucle entre l'étape 300 et 290. Dans le cas contraire (branche oui), l'ordinateur central émet un signal de validation (Si) et le programme se branche à l'étape 310.

A cette étape, le programme se met en mode prise de vue et suit des étapes 320 à 390 équivalentes aux étapes 130 à 200 de la figure 2.

L'étape de prise de vue et de saisie des données graphiques dans l'application du procédé à la personnalisation de carte santé, est alors terminée.

On va décrire maintenant le fonctionnement de la station de prise de vue dont est équipé le photographe à l'appui de l'organigramme de la figure 8 et la figure 11 illustrant la station.

A l'étape 234, le photographe saisit le numéro de l'assuré social constituant la donnée d'identification au sens de l'invention sur le clavier 16, et le communique à l'ordinateur central de l'autorité via la liaison de communication 6a à 6e en validant la saisie.

Ensuite, de la même manière que pour la réalisation de la carte transport décrite infra, il y a une étape test 235 de vérification de la cohérence de la donnée conforme à l'étape 300 de la figure 6, la donnée d'identification ayant été saisie préalablement par l'autorité et archivée dans son ordinateur central. Le logiciel se boucle à l'étape précédente en cas d'absence de cohérence et dans le cas contraire, il se branche à l'étape 236 la prise de vue de vue étant autorisée.

Ensuite, le photographe montre la prise de vue numérisée à l'assuré qui a la possibilité de refuser et de recommencer. En cas d'acceptation, la prise de vue est terminée à la case 239.

Ensuite, le programme se branche successivement à des étapes 240, 241, 242 de compression de données, de calcul d'adresses de routage et de transmission vers un centre de routage ou vers un ordinateur central 5a.

Dans le cas où l'assuré social ne peut pas se déplacer (assuré social invalide), la photographie peut être réalisée à domicile au moyen d'un équipement portable ou par scannérisation d'une photographie fournie par l'assuré social.

La personnalisation de la carte de santé est ensuite réalisée en grande série comme décrit en liaison avec l'organigramme de la figure 4.

En ce qui concerne la remise de la carte de santé à l'assuré social, cela peut se faire sans contrôle, les cartes étant acheminées par courrier ou retirées sans formalité à la mairie ou à la poste du domicile de l'assuré.

Si l'on désire effectuer un contrôle en vérifiant que le visage de la personne correspond bien à l'image imprimée sur la carte, il faut qu'une personne habilitée, telle qu'un agent de la caisse d'assurance maladie, un postier ou un employé de mairie vérifie la photographie par rapport au titulaire.

On va décrire maintenant le fonctionnement d'une station de personnalisation grande série à l'appui à l'organigramme de la figure 4 et la figure 10.

La personnalisation en grande série illustrée par les étapes 220 à 225 est adaptée, par exemple, au renouvellement d'une pluralité de cartes d'abonnement longue durée telles des cartes bancaires, des cartes santé.

Dans ce cas, il est nécessaire de lancer une campagne de personnalisation, en effectuant un rappel des fichiers contenant au moins les données graphiques et d'associer ces données aux informations relatives à l'usage.

En variante, l'ensemble des données et informations peut être contenu dans un même fichier archivé dans des moyens mémoire d'un ordinateur central d'un système de personnalisation décrit supra, ce fichier étant rappelé à l'aide de la donnée d'identification.

La personnalisation graphique et électrique et/ou magnétique est alors lancée à l'aide des moyens 11 à 14 décrits supra.

L'ordinateur ou le serveur 5a communique les données de chaque fichier au moyens ci-dessus pour confectionner chaque carte, par exemple un PSC. Les PSC sont ensuite conditionnés et acheminés vers l'usager par exemple par voie postale.

La campagne de personnalisation dans le cadre d'un renouvellement de cartes, est alors terminée.

Grâce à l'invention, on peut réduire considérablement les contraintes financières d'une autorité, notamment celles liées à l'investissement en station de prise de vue. En effet, le procédé de l'invention peut être facilement mis en oeuvre et à moindre coût à partir de cabines de prise de vue existantes conformes à celle décrite dans la demande de brevet français 92 0404, illustrée aux figures 14 et 15 et adaptée conformément à l'invention.

Avantageusement, ces cabines peuvent accueillir plusieurs modes de fonctionnement spécifiques ( i, j...n ) propres à plusieurs autorités en plus de leur mode de fonctionnement normal (figure 13) pour un fonctionnement multicarte. Elle comprend à cet effet des moyens de sélection de la carte à obtenir, et du mode de fonctionnement / utilisation correspondant.

Cela implique d'avoir dans l'unité centrale de la cabine plusieurs logiciels spécifiques, plusieurs adresses de routage possibles (Ri, Rj,...Rn) correspondant chacune à une autorité. L'unité mémoire de la station de personnalisation ou d'un ordinateur central (figure 14), comporte quant à elle plusieurs logiciels d'attribution d'une donnée d'identification (Ai, Aj, ...An), plusieurs logiciels de contrôle du droit à la réalisation d'une photographie numérique (Ti, Tj,...Tn), éventuellement plusieurs signaux d'autorisation et/ou de déclenchement (Si, Sj..Sn) et plusieurs programmes de rappel (RAi, RAj...RAn), (Rvi, RVj...RVn).

Les moyens de sélection peuvent être constitués par tout moyen connu tel qu'un affichage des différents modes sur un écran sous forme d'un menu selon un programme de sélection ou des touches correspondantes préétablies disposées sur un tableau de commande.

On remarque que la transformation multicarte d'une installation conçue pour une seule carte est très facile à effectuer puisque cette transformation consiste essentiellement en l'ajout des programmes ci-dessus en mémoire d'une unité centrale.

Ainsi, une autorité qui se doterait de l'installation ou qui posséderait déjà des cabines est en mesure de louer leur utilisation à d'autres autorités. Ce dernier point est particulièrement favorable à résoudre le problème de coût de mise en oeuvre du procédé.

Comme on l'a compris, l'invention vise principalement la réalisation de carte plastique avec mémoire; toutefois, dans le cas où les moyens de personnalisation électrique ne seraient pas utilisés, (par exemple, une utilisation en dessous de sa capacité) on comprend que l'invention permet également, la réalisation de cartes plastiques sans mémoire ou de tout document sur lequel une photographie numérisée pourrait être imprimée. Les informations peuvent être imprimées au lieu d'être enregistrées. A l'inverse, on peut également réaliser des cartes sans l'étape de personnalisation graphique, la photographie n'étant pas imprimée mais enregistrée dans la puce. Le contrôle visuel s'effectuerait comme indiqué ci-après.

De même, bien que l'invention vise principalement à empêcher la fraude pendant la réalisation de la carte; l'invention peut mettre en oeuvre des étapes connues ci-après visant à empêcher une falsification après ou parallèlement à la réalisation de la carte.

A cette fin, le procédé de réalisation peut comprendre en outre des étapes visant à crypter les données enregistrées dans la puce, et/ou a créer un hologramme, et/ou à sécuriser les données. Les moyens à mettre en oeuvre pour réaliser une telle étape pris isolément sont connus de l'homme de l'art.

Le procédé peut comprendre également une étape visant à enregistrer dans la puce les données graphiques de préférence sous forme compressée et/ou sous forme cryptée ou des indications relatives au visage de l'usager. L'autorité peut ainsi, par un contrôle à l'aide d'un lecteur approprié de type connu, décrypter la données graphiques et/ou les informations.

## Revendications

1. Procédé pour réaliser un titre d'usager personnalisé infalsifiable, autorisant un usage régi par une autorité, ledit titre étant constitué par une carte comportant une face munie d'une photographie du portrait de l'usager, et un support mémoire comportant au moins des informations relatives à l'usage, ledit procédé comprenant les étapes suivantes selon lesquelles:
- on saisit numériquement une prise de vue de données graphiques correspondant au visage de l'usager,
- on saisit numériquement au moins les informations relatives à l'usage,
- on fournit une carte comportant une face et un support d'enregistrement,
- on personnalise graphiquement ladite carte par impression graphique de ladite photographie sur la face de la carte à partir desdites données graphiques numériques,
- on personnalise électriquement la carte en enregistrant lesdites informations numériques dans ledit support,
**caractérisé en ce que** l'on dissocie les étapes et **en ce que** l'on soumet la mise en oeuvre d'une étape dissociée des autres étapes à autorisation et/ou contrôle ultérieur de l'autorité.

2. Procédé selon la revendication 1, **caractérisé en ce qu'**au moins la prise de vue de données graphiques et leur saisie numérique sont dissociées des étapes restantes et **en ce qu'**il comprend une étape selon laquelle on met les données graphiques à disposition de l'autorité sous son contrôle direct ou indirect.

3. Procédé selon la revendication 1 ou 2, **caractérisé en ce qu'**il comprend les étapes suivantes pour une dissociation dans le temps selon lesquelles:
- on attribue une donnée d'identification aux données graphiques et/ou aux informations et on les saisit sous cette donnée de manière espacée dans le temps.
- on stocke au moins les données graphiques et on les rappelle par le biais de cette donnée d'identification pour la personnalisation de la carte.

4. Procédé selon l'une des revendications 1 à 3, **caractérisé en ce qu'**il comprend les étapes suivantes pour une dissociation dans l'espace selon lesquelles:
- on attribue une donnée d'identification aux données graphiques et/ou aux informations et on les saisit sous cette donnée sur des sites distincts et éloignés l'un de l'autre.
- on transmet au moins les données graphiques à l'autorité et on les rappelle par le biais de cette donnée d'identification pour la personnalisation de la carte.

5. Procédé selon l'une des revendications 1 à 4, **caractérisé en ce que**, pour une dissociation dans le contrôle, l'on effectue au moins la prise de vue ou la saisie des données graphiques numériques sous le contrôle de l'usager.

6. Procédé selon l'une des revendications précédentes, **caractérisé en ce que**, dans un premier temps, on effectue la saisie des informations et leur enregistrement sur une carte provisoire, et dans un deuxième temps on réalise la saisie des données graphiques et leur impression sur la carte.

7. Procédé selon l'une des revendications 2 à 6, **caractérisé en ce qu'**il comprend une étape pour autoriser la prise de vue ou la saisie des données graphiques selon laquelle on communique ladite donnée d'identification à l'autorité qui en vérifie la conformité

8. Procédé selon la revendication 7, **caractérisé en ce** l'autorisation déclenche un mode spécifique de prise de vue parmi plusieurs modes.

9. Procédé selon l'une .des revendications 2 à 8, **caractérisé en ce que** ladite donnée comporte une donnée attribuée par l'autorité.

10. Procédé selon l'une des revendications 2 à 9, **caractérisé en ce que** ladite donnée comporte une donnée attribuée par l'usager.

11. Procédé selon l'une des revendications 6 à 10, **caractérisé en ce que** la donnée de l'autorité est lue sur la carte provisoire.

12. Procédé selon l'une des revendications 6 à 11, **caractérisé en ce que** la donnée de l'usager est communiquée à l'autorité par l'usager.

13. Procédé selon l'une quelconque des revendications 2 à 12, **caractérisé en ce que en ce qu'**il comporte une étape selon laquelle pour vérifier que le porteur est bien l'usager, au moins les données graphiques rappelées sont visualisées de manière à les comparer avec le visage de l'usager et on réalise une carte définitive en cas de conformité

14. Procédé selon l'une quelconque des revendications précédentes, **caractérisé en ce** ladite saisie des données graphiques numériques s'effectue en libre service automatiquement.

15. Procédé selon l'une quelconque des revendications précédentes, **caractérisé en ce que** l'ensemble des étapes s'effectue en libre service automatiquement.

16. Procédé selon l'une quelconque des revendications précédentes, **caractérisé en ce que** ladite saisie numérique des données graphiques est effectuée à partir d'une prise de vue de données graphiques saisies sur un négatif ou un papier photographique.

17. Procédé selon l'une quelconque des revendications précédentes, **caractérisé en ce qu'**il comprend en outre une étape consistant à crypter les données enregistrées dans une puce, et/ou a créer un hologramme, et/ou à sécuriser les données.

18. Procédé selon l'une quelconque des revendications précédentes, **caractérisé en ce qu'**il comprend en outre une étape consistant à enregistrer dans une puce les données graphiques sous forme compressée et/ou sous forme cryptée.

19. Installation pour réaliser un titre d'usager personnalisé infalsifiable, autorisant un usage régi par une autorité, ledit titre étant constitué par une carte comportant une face munie d'une photographie du portrait de l'usager, et un support mémoire comportant au moins des informations relatives à l'usage, ladite installation comprenant:
- au moins une station de prise de vue (3, 4, 22, 23, 23a) comportant un moyen de saisie numérique de données graphiques (50, 42, 47),
- au moins un moyen de saisie numérique des informations (16, 38),
- au moins un moyen de stockage et de distribution de données (5a, 5b);
- au moins un moyen d'impression (11, 29) pour personnaliser graphiquement ladite carte à partir desdites données graphiques numériques,
- au moins un moyen d'enregistrement (12, 30) pour enregistrer lesdites informations dans ledit support,
- au moins une unité centrale (7, 31) pour piloter ces moyens,
**caractérisée en ce qu'**elle est apte à dissocier le fonctionnement / utilisation desdits moyens entre eux et à soumettre leur fonctionnement / utilisation à autorisation et/ou à un contrôle ultérieur de l'autorité.

20. Installation selon la revendication 19, **caractérisée en ce qu'**elle est apte à dissocier le fonctionnement / utilisation des moyens de prise de vue et de saisie numérique de données graphiques de celui des autres moyens, et à mettre les données graphiques obtenues à disposition de l'autorité.

21. Installation selon l'une des revendications 19 ou 20, **caractérisée en ce que** pour avoir un(e) fonctionnement / utilisation desdits moyens dissocié(e) dans le temps, elle est apte à attribuer une donnée d'identification aux données graphiques et/ou aux informations et à les stocker dans les moyens de stockage et de distribution (5a, 5b) sous ladite donnée d'identification, lesdits moyens de stockage étant sous le contrôle de l'autorité et à les rappeler par l'intermédiaire de ladite donnée par le biais d'un programme de rappel (RA).

22. Installation selon l'une des revendications 19, 20 ou 19, **caractérisée en ce que** pour avoir un(e) fonctionnement / utilisation desdits moyens dissocié(e) dans l'espace, elle comporte une pluralité de stations de prise de vue décentralisées (3, 4, 23, 23a) chaque station étant apte à transmettre à distance au moins les données graphiques à au moins un moyen de stockage.

23. Installation selon la revendication 19 à 22, **caractérisée en ce que** pour avoir un(e) fonctionnement / utilisation desdits moyens dissocié(e) dans le contrôle, ladite station de prise de vue est adaptée à fonctionner en libre service partiellement sous le contrôle de l'usager.

24. Installation selon la revendication 22, **caractérisée en ce qu'**elle comporte en outre une pluralité de stations de personnalisation décentralisées (2a, 24, 24a,) montées en réseau entre elles, chaque station de personnalisation comportant :
- un moyen de saisie d'informations, un moyen de stockage et de distribution de données,
- un moyen d'impression pour imprimer les données graphiques sur ladite carte,
- un moyen d'enregistrement pour enregistrer lesdites informations dans ledit support,
- une interface de communication (8, 28) pour communiquer au moins avec une autre station de personnalisation,
- une unité centrale (7a, 31) pour piloter ces moyens.

25. Installation pour la mise en oeuvre du procédé selon l'une des revendications 1 à 18, **caractérisée en ce qu'**elle comprend une station de prise de vue qui comporte un moyen de prise de vue et de saisie numérique de données graphiques, une unité centrale, une interface de communication (18, 49) et **en ce qu'**elle est apte à transmettre à distance les données graphiques.

26. Installation pour la mise en oeuvre du procédé selon l'une des revendications 1 à 18, **caractérisée en ce qu'**elle comprend une station de prise de vue qui comporte un moyen de prise de vue et de saisie numérique de données graphiques, une unité centrale et qui est adaptée pour fonctionner en libre service.

27. Installation pour la mise en oeuvre du procédé selon l'une des revendications 1 à 18, **caractérisée en ce qu'**elle comprend une station de personnalisation de carte qui comporte un moyen de saisie d'informations, un moyen de stockage et de distribution de données, une imprimante graphique pour imprimer les données graphiques sur une carte, un moyen d'enregistrement pour enregistrer lesdites informations dans un support, une unité centrale pour piloter ces moyens, une interface de télécommunication (8, 28) pour communiquer au moins avec une autre station de personnalisation.

28. Installation selon l'une des revendications 21 à 27, **caractérisée en ce que** l'unité centrale comporte un programme (Ai) apte à attribuer une donnée d'identification pour les données graphiques et/ou lesdites informations.

29. Installation selon l'une des revendications 21 à 28, **caractérisée en ce que** pour attribuer une donnée d'identification, chaque station de prise de vue ou de personnalisation comporte un moyen de saisie d'information (16, 26, 27, 33, 38, 40, 41).

30. Installation selon la revendication 29, **caractérisée en ce que** ledit moyen de saisie est un clavier alphanumérique (10, 16, 33, 38) associé à une unité centrale (7a,15b, 31, 46).

31. Installation selon la revendication 29, **caractérisée en ce que** ledit moyen de saisie est un lecteur de carte (26, 27, 40, 41) associé à une unité centrale (31, 46) .

32. Installation selon la revendication 31, **caractérisée en ce que** ledit lecteur est du type sans contact (41).

33. Installation selon l'une des revendications 19 à 32, **caractérisée en ce que** l'unité centrale comporte un programme de contrôle (Ti) apte à vérifier la conformité de la donnée d'identification et à autoriser la saisie des données graphiques en cas de conformité.

34. Installation selon la revendication 33, **caractérisée en ce que** le programme de contrôle (Ti) déclenche un mode de prise de vue spécifique (i) parmi plusieurs modes (i, j...n) par le biais d'un signal (Si).

35. Installation selon l'une des revendications 19 à 33, **caractérisée en ce que** chaque station de prise de vue ou de personnalisation comportent un moyen de compression de données (17, 35).

36. Installation selon l'une des revendications 19 à 35, **caractérisée en ce que** chaque station de prise de vue ou de personnalisation comporte un moniteur (34, 45) relié au moyen de stockage (5a, 5b) et ce que ledit programme de rappel (RA) comporte une étape (RV) consistant à visualiser au moins les données graphiques sur le moniteur.

37. Installation selon l'une des revendications 19 à 36, **caractérisée en ce qu'**elle comporte un serveur (5a, 5b) monté en réseau avec chaque station de prise de vue et chaque station de personnalisation

38. Installation selon l'une des revendications 19 à 37, **caractérisée en ce qu'**elle comporte en outre une station de personnalisation grande série (2a).

39. Installation selon l'une des revendications 19 à 38, **caractérisée en ce que** chaque station de prise de vue est disposée dans une cabine automatique en libre service (22).

40. Installation selon l'une des revendications 19 à 39, **caractérisée en ce que** chaque station de prise de vue (23a) et chaque station de personnalisation (24a) sont disposées ensemble dans une cabine automatique en libre service (22).

41. lnstallation selon l'une des revendications 19 à 40, **caractérisée en ce que** la station de prise de vue ou de personnalisation comporte un scanner (50) apte à saisir une prise de vue tirée sur un négatif ou du papier photographique.

42. Installation selon l'une des revendications 19 à 41, **caractérisée en ce que** la station de prise de vue ou de personnalisation comprend plusieurs modes de fonctionnement spécifiques ( i, j,...n ) pour un fonctionnement multicarte et des moyens de sélection de la carte à obtenir ainsi que du mode de fonctionnement / utilisation correspondant.
